Europäisches Patentamt

European Patent Office

Office européen des brevets

(19)

(11) **EP 1 226 729 B1**

(12) # EUROPEAN PATENT SPECIFICATION

(45) Date of publication and mention
of the grant of the patent:
**27.07.2005 Bulletin 2005/30**

(21) Application number: **00973272.8**

(22) Date of filing: **23.10.2000**

(51) Int Cl.⁷: **H04Q 7/34**, H04Q 7/38

(86) International application number:
**PCT/NO2000/000353**

(87) International publication number:
**WO 2001/030099 (26.04.2001 Gazette 2001/17)**

(54) **SYSTEM FOR DETERMINING WHETHER THE POSITION OF A MOBILE COMMUNICATION UNIT IS WITHIN A LIMITED SPATIAL PORTION**

SYSTEM ZUR BESTIMMUNG DER ANWESENHEIT EINER MOBILSTATION IN EINEM ABGEGRENZTEN GEBIET

SYSTEME UTILISE AFIN DE DETERMINER SI LA POSITION D'UNE UNITE DE COMMUNICATION MOBILE SE TROUVE DANS UNE ZONE SPATIALE LIMITEE

(84) Designated Contracting States:
**AT BE CH CY DE DK ES FI FR GB GR IE IT LI LU MC NL PT SE**

(30) Priority: **22.10.1999 NO 995185**
**20.07.2000 NO 20003738**

(43) Date of publication of application:
**31.07.2002 Bulletin 2002/31**

(73) Proprietor: **Radionor Communications AS**
**7047 Trondheim (NO)**

(72) Inventors:
• **SAEGROV, Atle**
**N-7046 Trondheim (NO)**

• **SAETHER, Geir**
**N-1386 Asker (NO)**

(74) Representative: **Blatchford, William Michael et al**
**Withers & Rogers LLP**
**Goldings House,**
**2 Hays Lane**
**London SE1 2HW (GB)**

(56) References cited:
**EP-A2- 0 932 049        WO-A1-00/21222**
**WO-A1-97/49255        WO-A2-98/34421**

**Description**

TECHNICAL FIELD

The present invention relates generally to position determining in wireless communication systems, in particular cell based communication systems. More specifically, the invention relates to a system for determining whether the position of a mobile communication unit, operating in a cell based communication system, is within a limited spatial portion.

The invention also relates to use of such systems for controlling characteristics of communication services available to the mobile communication unit in a cell-based communication system and for controlling characteristics of call rates associated with the use of the mobile communication unit in a cell-based communication system.

The invention also relates to a use of such a system for determining whether the position of a mobile communication unit is within a room in a building.

BACKGROUND OF THE INVENTION

The problem of determining information about the geographical position for a mobile communication unit, particularly a mobile telephone such as a cellular phone, has been subject to various solutions. The need for determining such information has been based on different reasons, e.g. the need for tracing the position of a mobile telephone initiating an emergency call.

An area of application where information about the position of a mobile telephone is required, is the control of availability characteristics of the mobile telephone, based on its position. This includes applications where the use of the mobile telephone, or the use of certain of the telephones' functions, is restricted or prevented within specific areas such as, e.g., inside a school building or in a theatre.

Another area of application is the possibility of providing position dependent call rates, e.g. offering discounts for calls originating from specific geographical areas.

The spatial volume portion may be fixed in position or moveable with respect to time. The ability to provide a mobile spatial portion where certain services may apply, is in particular interesting for payment services in, say, a taxi where a client may pay the bill by his cellular phone. Another application is within mobile tracking systems, where cellular phones can be tracked by mobile equipment which is a very cost effective way of implementing a precise positioning system without the need for building a large infrastructure of sensors.

RELATED BACKGROUND ART

EP-0 932 049 A2 (published 28 July 1999) discloses a positioning apparatus provided in a cellular base station, for determining the position of a cellular phone in a cell covered by the base station. The apparatus is particularly applicable for cellular mobile telephone systems using CDMA (code division multiple access), and it is especially adapted for increased positioning precision in an urban area. The positioning apparatus comprises an array of antenna elements for receiving a transmission signal transmitted by the cellular phone, receivers and demodulators for receiving and CDMA-demodulating the signals received by the respective antennas, an estimation circuit for estimating the incident direction, the delay time and the relative power for the signal transmitted by the cellular phone, and a positioning circuit for establishing the position of the cellular phone on the basis of the quantities provided by the estimation circuit. This apparatus is closely connected to the infrastructure of the cellular communication system, as it is a part of a base station. The apparatus has the disadvantage that it can not be used for freely establishing a spatial portion for determining the presence of a cellular phone within the spatial portion, independent of the cell structure provided by the base station.

WO-97/49255 discloses a method for reducing the disturbance caused by mobile communication devices. A special apparatus transmitting a broadcast message is installed in areas where the disturbance shall be limited. The apparatus transmits a broadcast message that mutes the mobile station transmitter, and hence, reduce the availability of the mobile station in the area of coverage from the transmitter. The determination of the position of a cellular phone present within a particular cell defined by the coverage of a base station transceiver. To improve the precision of the method, the cell is provided can be a so called pico-cell, i.e. a cell with a very small extent. This method is also strongly connected with the infrastructure of the cellular system. The addition of a new cell with the intention of providing position information, involves quite complex modifications of the communication network, including frequency planning. The use of pico-cells for determining the position has several other drawbacks as well, as the spatial portion covered by the pico-cell is dependent on characteristics of the base station transceiver and the cellular phone, such as their sensitivity, and hence, the precision is low. Another limitation is that the mobile station will change base station if a signal from the base station is stronger than the one of the pico-cell. This means that one need to place enough pico-cells in the area to fill all "holes" where the signal form external base stations is stronger than the local pico-cell.

SUMMARY OF THE INVENTION

It is an object of the present invention to provide a system for determining whether the position of a mobile communication unit, operating in a cell based communication system, is within a limited spatial portion, wherein the drawbacks of prior art solutions are defeated or reduced.

A particular object of the invention is to provide such a system in which the equipment used for position determining is designed to be completely independent of the existing infrastructure of base station transceivers included in the cell based communication system in which the mobile communication unit operates.

Another object of the invention is to provide such a system wherein said spatial portion may be established without making any considerations to the areas defined as communication cells by the base station transceivers.

A further object of the invention is to provide such a system which may be moved from one location to another, without making any considerations or modifications to the existing infrastructure of the mobile communication system, such as frequency planning.

Yet another object of the invention is to provide such a system which is based solely on local receiving equipment, and wherein no RF transmitting devices are necessary.

Still another object of the invention is to provide for the use of such a system for controlling characteristics of communication services available to the mobile communication unit in the cell-based communication system, or for controlling characteristics of call rates associated with the use of the mobile communication unit in the cell-based communication system.

An additional object of the invention is to provide for the use of such a system for determining whether the position of a mobile communication unit is within a room in a building.

According to the invention, the above objects and other advantages are obtained by a system for determining whether the position of a mobile communication unit which operates in a cell based communication system is within a limited spatial portion, said system comprising a number of sensor units, each sensor unit located at a position within or close to said spatial portion, and each comprising at least one antenna element, each arranged to receive a signal transmitted from the mobile communication unit, and a detector unit, said detector unit comprising a measuring device for providing measurements of characteristics of the carrier wave of at least one signal received by the antenna elements, and a control device for determining whether the position of the mobile communication unit is within the limited spatial portion, based on said measurements.

In a preferred embodiment, said characteristics of the carrier wave comprise the phase, the amplitude or the frequency of the carrier wave, or any combination thereof.

In a preferred embodiment, the sensor units comprise means for selectively connecting the antenna elements to an input of the detector unit. This makes it possible to utilize sensor units chained in a serial fashion on one common transmission line, wherein the antenna elements are selected as receivers one at a time. In turn, this leads to the realization of a simple, inexpensive and reliable subsystem of sensor units.

In a preferred embodiment, the system further comprises a decoding device, arranged to provide identity data associated with the mobile communication unit by processing a received signal, transmitted from the mobile communication unit.

This makes it possible for the system to identify the mobile communication unit, in addition to achieve information about its presence within or the spatial portion.

In a preferred embodiment, an output of the detector unit is further connected to the cell-based communication system through a communication network. This leads to that appropriate action may be initiated within the cell-based communication system, based on the result of the possible determined presence of the mobile communication unit within the spatial portion.

The system is advantageously characterized in that the detector unit comprises a first and a second antenna input, and that the measuring device comprises a first and a second antenna input devices, whose outputs are connected to a phase detecting device, providing a phase difference signal indicating the phase difference between the signals applied to the first and second antenna inputs.

Further preferred in this system, the phase detecting device comprise a first and a second frequency down-converter, whose outputs are connected to a phase comparator, providing said phase difference signal.

Further preferred, the system comprises a decoding device, arranged to provide identity data associated with the mobile communication unit by processing a received signal, transmitted from the mobile communication unit, said decoding device comprising a decoder connected to the output of the first or the second frequency down-converter.

In any embodiment of the system, each sensor unit advantageously comprises two antenna elements. This has a particular advantage when the sensor is used for detecting the direction of an incident radio wave.

Further, in any embodiment, each sensor unit comprises circuits arranged to derive a supply voltage, a selector signal associated with the selection of the sensor unit and with the selection of a particular antenna within the sensor unit, and a RF signal, from a signal applied to the sensor unit. This has the advantage that one single transmission line can be used for both providing power supply a signal associated with multiplex information, and a forwarded RF signal, to the sensor unit.

In the latter embodiment, each sensor unit in the system advantageously comprises an input terminal, connected to a low pass filter for deriving DC voltage for power supply of the sensor unit, and a ground terminal. This has the advantage that one single transmission line, such as a coax cable, can be used for providing power supply for the sensor unit.

Likewise, each sensor unit in the system advantageously comprises an input terminal, connected to a band-pass filter, in turn connected to a quantizer/controller, for deriving a selector signal, said selector signal indicating whether said sensor unit is a selected sensor unit, and, in the case that the sensor unit comprises two or more antennas indicating which of the antennas that should be a selected antenna within the sensor unit. This has the advantage that the sensor unit may supplied with a signal associated with multiplex information through the transmission line.

Moreover, each sensor unit advantageously comprises an input terminal, connected to a high-pass filter for deriving a input RF signal, said input RF signal being connected to an electronic switch, arranged for selecting either said RF signal or an antenna signal as a forward RF signal. This has the advantage that the transmission line can be utilized for the forward transmission of a RF signal through various sensor units chained along the transmission line.

Said electronic switch advantageously comprises a select input, connected to a selector signal derived from the output of a quantizer/controller fed by the output of a band-pass filter whose input is connected to said input terminal of the sensor unit.

Advantageously, the detector unit is arranged to calculate the position of the mobile communication unit, based on said measurements, and arranged to determine whether the position of the mobile communication unit is within said limited space portion, based on said position and stored data defining said space portion.

In an embodiment of the system, each sensor unit in the system comprises two antenna elements, and the sensor unit is arranged to detect the essential direction of a RF signal intersecting the antenna elements.

In the latter embodiment, the sensor unit advantageously comprises two planar antenna elements, arranged parallel to a detector plane and on opposite sides of said detector plane.

Further preferred in the latter embodiment, the measuring device is arranged to provide a phase difference signal indicating the phase difference between the signals received by the two antenna elements, and to provide a wave direction signal, indicating the essential direction of a RF signal intersecting the detector plane, based on said phase difference signal.

Further preferred in the latter embodiment, the boundaries of the limited space portion is defined by the location of a number of sensor units, and the control device is arranged to determine whether the position of the mobile communication unit is within the limited spatial portion, based on said wave direction signals.

In any embodiment of the system, the sensor units are advantageously located at a distance less than 100 meters from any point in the spatial portion. In other embodiments the distance may be different, based on the fact all the sensor units should be located within the range of the transmitter in the mobile communication unit, with a sufficient link margin.

The invention also concerns the use of the disclosed system, wherein the detector unit is connected to a cell-based communication system through a communication network, for controlling characteristics of communication services available to the mobile communication unit in the cell-based communication system.

The invention also concerns the use of the disclosed system, wherein the detector unit is connected to a cell-based communication system through a communication network, for controlling characteristics of call rates associated with the use of the mobile communication unit in the cell-based communication system.

Finally, the invention also concerns the use of the disclosed system, for determining whether the position of a mobile communication unit is within a room in a building.

Further uses of the system according to invention comprises

- information services, where various information is provided to the mobile communication unit, dependent on the determined position;
- security services, e.g. where the presence of activated mobile communication units is detected in prohibited areas; monitoring services, where information related to mobile communication units present in a particular area/volume and their identity are monitored and possibly recorded; and
- payment services, where the presence of a mobile communication unit and its identity in an area or volume is utilized as pertinent data in a payment transaction

BRIEF DESCRIPTION OF THE DRAWINGS

The invention shall in the following be described with reference to the figures, where

Figure 1 is a perspective illustration of a small, defined spatial portion within a cell based communication system environment;

Figure 2 is a perspective view illustrating the principles of a system according to the invention;

Figure 3 is a perspective illustration of the parameters that is used by the detector device to determine whether the mobile station is within the spatial portion;

Figure 4 is a block diagram showing modules within a system according to the invention, as well as details of a cell-based communication system;

Figure 5 is a communication diagram that illustrates a sequence of messages used for obtaining identity data for the mobile communication unit;

Figure 6 is a complex vector diagram that shows the relation between the signal, interference and noise and the effect on the phase measurement accuracy for a received signal;

Figure 7 is a block diagram that shows an example of realization of a detector unit.

Figure 8 is a block diagram that shows an example of realization of a sensor unit.

Figure 9 is a block diagram that shows an example of how a set of sensor units and a control unit can be realized.

Figure 10 is a block diagram that illustrate the simple realization of a "low office billing rates" solution.

Figure 11 is a top view of a room provided with an embodiment of a system according to the invention,

Figure 12 illustrates a frequency plan and the utilization of frequencies in a cell based communication system.

Figure 13 is a perspective outline of a preferred sensor unit,

Figure 14 is a sectional view of a preferred sensor unit,

Figure 15 is a block diagram that illustrates the interface of a system according to the invention to a GSM phase 2+ communication system.

Figure 16 is a combined physical perspective and graph illustration of an example of position finding based on Doppler shift.

Figure 17 is a perspective outline of a device that constitutes a simple form of a system according to the invention.

DETAILED DESCRIPTION OF EMBODIMENTS

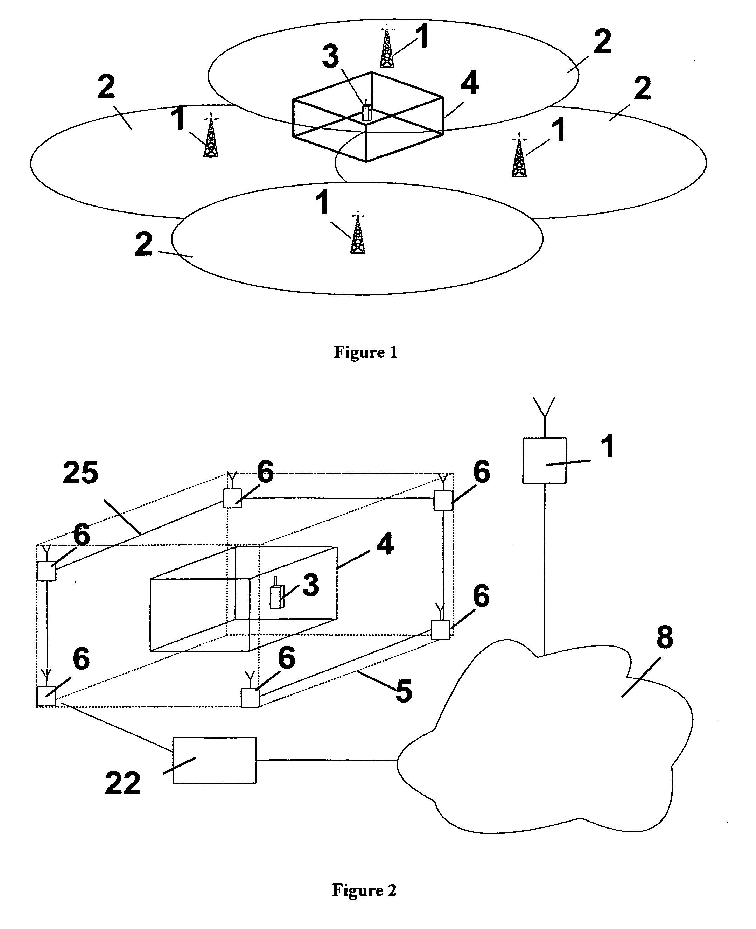

Figure 1 is a perspective illustration of a a small, defined spatial volume within a cell based communication system environment.

Figure 1 illustrates the basis of a system according to the invention. A limited portion 4 of a spatial volume is defined within a cell based communication system environment, comprising a plurality of base station transceivers 1 and corresponding communication cells 2. The position and extent of the spatial portion 4 is independent of the cell-based environment, such as the cell structure. The portion 4 may thus be covered by one of the cells 2, or it may be located at the intersection of several cells.

The spatial portion 4 may essentially have an arbitrary, continuous shape. In many cases, it will however have a simple, easily defined shape such as a rectangular box, as shown. Alternatively, it may have the shape of a cylinder, a portion of a sphere or virtually any geometric shape.

The spatial portion 4 will typically be a relatively small volume, with a base area preferably less than about 100·100 meters and a height of less than about 20 meters. More preferably, the base area is between 1·1 meters and 40·40 meters, and the height is between 2 and 8 meters. In a typical application, the spatial portion 4 may be a room in a building, such as a conference hall, a theatre, a class room, an office or the like. Alternatively, the portion 4 may be a part of a building, covering several physical rooms, or covering only a section of a room, such as a limited part of e.g. an airport lounge.

An object of the invention is to determine whether a mobile communication unit, such as a mobile station, particularly a cellular phone, is within the space portion 4. Dependent on the result of this determination, a special service may apply for the mobile station 3. This service may involve the restriction of some of the mobile station's functions, such as preventing incoming calls, or providing a position dependent call rate, such as offering discounts or imposing increased rates, based on the result of the position determination.

Because of the technical independency between the system according to the invention and the existing cellular environment and infrastructure, the spatial portion 4 is also unaffected by the frequency plan for the communication cells. This makes it possible that the position and size of the spatial portion 4 can be either fixed or variable, without any impact to the communication between the mobile station 3 and the cell-based communication system.

Figure 2 is a perspective view illustrating the principles of a system according to the invention. In this example system, there is provided a service wherein the access to a mobile station is to be restricted when the mobile station is within the limited spatial portion 4. This service can be applied for cinemas, churches, schools or other places where the use of mobile stations 3 shall be restricted in order not to disturb people present in the area corresponding to the spatial portion 4.

In figure 2, the limited spatial portion 4 is included in a larger, spatial volume 5. The spatial portion 4 and the spatial volume 5 may alternatively coincide, and thus constitute the same space.

The larger, spatial volume 5 has been illustrated to define the boundaries for the location of sensor units 6 comprised by the system. The sensor units are located within or close to the spatial portion 4. Advantageously, the sensor units are located not more than 100 meters from any point within the spatial portion 4.

Typically, the spatial portion 4 may be a room in a building, while the spatial volume 5, which constitutes the boundaries for the location of sensor units, may be a larger part of the building that includes the room. Alternatively, the spatial portion may be a non-physically delimited part of a room, such as a section of a hall, and the larger, spatial volume 5 may be the room itself, such as the hall.

A number of sensor units 6 are located at corresponding sensor positions inside the larger, spatial volume 5. The mobile station is indicated to be present within the limited spatial portion 4. When the mobile station 3 transmits a signal to a base station transceiver 1, the sensor units 6 detects the amplitude and phase difference of the carrier wave transmitted from the mobile station 3. The information from the sensor units 6 is transferred to and analyzed in a detector unit 7, which is arranged to determine if the mobile station is inside a defined room volume 4. The control unit 7 also identifies the mobile station 3 by decoding the data transmitted from the mobile station, as explained in further detail below. If the mobile station 3 is determined to be inside the defined portion 4 where the service shall apply, a message is sent to a network 8 that interface the fixed network backbone in the cell-based communication system. The fixed network backbone system of the cell-based communication system may, on the basis of reception of a message that the mobile station 3 is inside a spatial portion 4 where the access to the mobile station shall be limited, cut the communication in progress to the mobile station 3 and invoke other features such as for instance a voice mail service that informs a caller that the mobile station is not available for the moment.

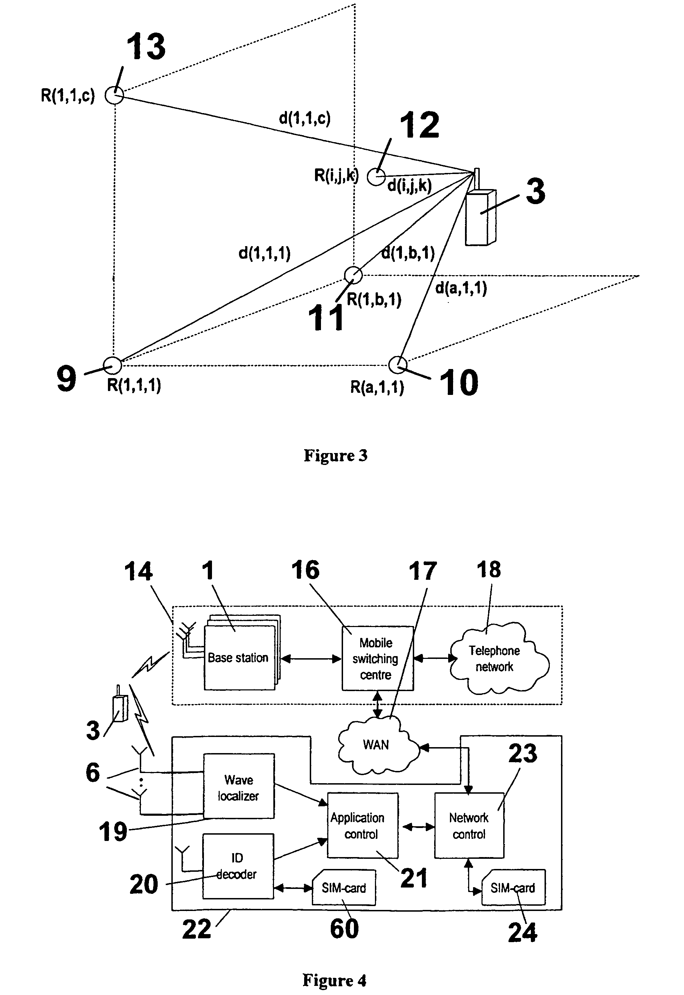

The principle for determining whether the mobile station is inside the defined spatial portion is illustrated in figure 3, where 9, 10, 11, 12 and 13 are locations for sensor units or radio receivers that is in relatively close vicinity (i.e. within the mobile station's transmitting range, typically less than e.g. 100 meters) to a mobile station 3. The receivers located at locations 9, 10, 11, 12 and 13 define a matrix defined by the indexes a, b and c where a, b and c can be a real number from 1 to infinity. If a, b and c are 1 the matrix consist of only one single receiver. The indicated receiver at 12 is a particular receiver in the matrix with index j, k and 1.

A mobile station 3 is in close vicinity to the sensor matrix. The physical distance from the mobile station 3 to a receiver 12 in the matrix if defined as d(i, j, k). The signal received from the mobile station 3 in the receiver 12 is then given as

$$r_{ijk}(t) = C_{ijk}(t) \cdot s(t)$$

where $s(t)$ is the signal sent from the mobile station 3 $C_{ijk}(t)$ is the complex path loss between the mobile station 3 and the receiver in the sensor matrix 12. The complex path loss between the mobile station 3 and the receiver in the matrix 12 can be written as

$$C_{ijk}(t) = L_{ijk}(t) \cdot e^{j\varphi_{ijk}(t)}$$

Where $L_{ijk}(t)$ is the path loss for the path d(i,j,k) and $\varphi_{ijk}(t)$ is the signal phase for the signal traveling the distance d(i,j,k). The position to the mobile station 3 is determined by solving the equation matrix given by $r_{ijk}(t)$ where $s(t)$ is the same for all equations together with geometrical data for the physical configuration of the sensor matrix. The solving of the matrix equations results in a position relative to the coordinate system used for the geometrical layout of the sensor matrix.

The calculated position is compared with coordinate data defining the spatial portion 4. Based on this comparison, a detector unit may determine whether the mobile station 3 was within the spatial portion 4.

A system according to the invention and some details of a cell-based communication system is illustrated in further detail in the block diagram in Figure 4.

A network system 14 comprises units in an existing network infrastructure for cell-based communication. A mobile station 3 is arranged for cell-based communication within this network system 14. The network system 14 include a number of base station transceivers 1, which are connected to a mobile switching center 16. The mobile switching center 16 is further connected to the network 18, typically a fixed telephone network. In the context of GPRS packet radio transmission the telephone network 18 can alternatively be a fixed packet transmission network such as the Internet.

A wave localizer 19, which is included in a detector unit 22, is connected to a number of sensor units 6. The wave localizer 19 is arranged to solve the equations to determine the position of the mobile station 3 within a local coordinate system, in which also the geometrical configuration of the sensors is defined.

An identity decoder 20 is arranged for monitoring a signal transmitted by the mobile station 3. For this purpose, the identity decoder is provided with a separat antenna 20a, and with means for decoding the signal received by the antenna 20a. Based on this decoding, the decoder 20 is arranged to determine identity data associated with the mobile station 3. In cases where the communication between the mobile station 3 and the base stations 1 is anonymized, the indentity decoder provides a unique data tag that can be used to the correct mapping of the identity either in the application controller 21 or externally to the detector unit 22.. The application controller 21 is typically a CPU (Central Processor Unit) with the ability to execute a program and contains the necessary resources such as memory, storage medium and input/output ports. The application controller 21 can be a micro-controller (Single chip solution) or a programmable or fixed logic solution where the processing is done by a state machine hardware. In cases where the communication between the mobile station 3 and the base stations 1 is encrypted, the identity decoder comprise a decryption module which enable the identity decoder to decode the identity of the mobile station 3. The keys needed to do the encryption are stored a the secure module, SIM card 60, and is used for the decryption.

The wave localizer 19 is arranged to provide relative position data of the mobile station 3, and the identity decoder 20 is arranged to provide an identity tag of the mobile station 3. These data are fed to and processed by an application controller 21 which comprises processing means for determining if the mobile station 3 is inside the defined spatial portion 4 where a special service shall apply. For this purpose, the application controller comprises stored data associated with the definition of the boundaries of the spatial portion 4. Based on the result of the determination processing performed by the application controller, an appropriate action is carried out by the application controller, dependent on the actual application. If, for instance, the application involves that the access to the mobile station 3 shall be restricted due to the recognition of the mobile station 3 within the spatial portion 4, the application controller will be arranged to send a message to the cell-based communication system 14 by a network controller 23 which may provide a secure data link by the use of keys hosted in a SIM card 24. A network 17 is arranged to interface the cell-based communication system 14 with the network controller 23. This network 17 may be any suitable network such as a LAN/ intranet, ISDN, GSM or Internet.

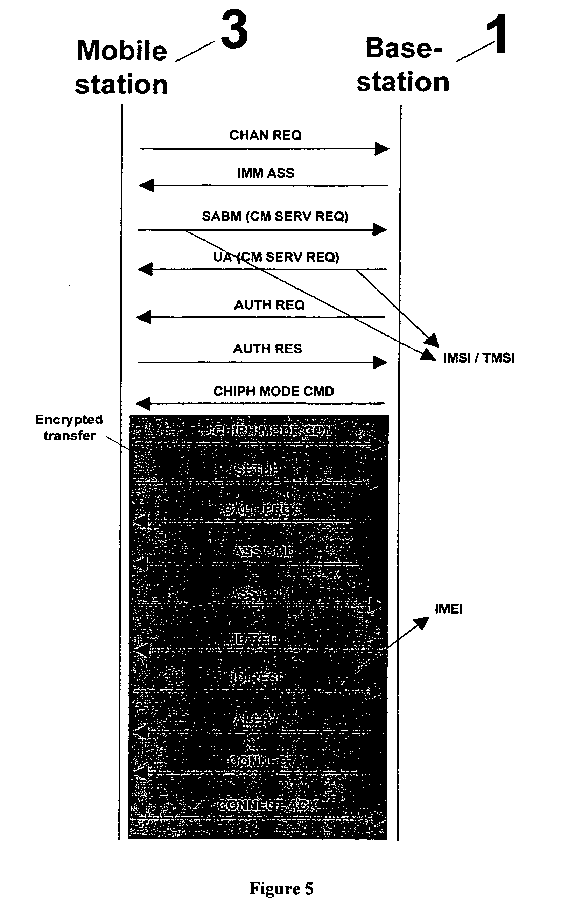

Figure 5 is a communication diagram that illustrates a sequence of messages used by the identity decoder 20 for obtaining identity data of the mobile communication unit. The example diagram show a typical sequence of messages transmitted during a location update in a GSM phase 2+ communication system. The sequence is started when mobile station initiates a call. By monitoring the sequence activity, when detecting the SABM message and the UA message respectively, the identity decoder is arranged to extract information about IMSI (International Mobile Subscriber Identity) or TMSI (Temporary Mobile Subscriber Identity) respectively, from the message sequence. This information originates from a SIM card in the mobile station 3, and can be used to identify the subscription associated with the mobile station. The identity decoder may also be adapted to decrypt communication which is coded by the so called A5 algorithm in a GSM cellular system. In this case, the identity controller may be arranged to extract information about IMEI (International Mobile Equipment Identity), which provides information about the type of the mobile station 3.

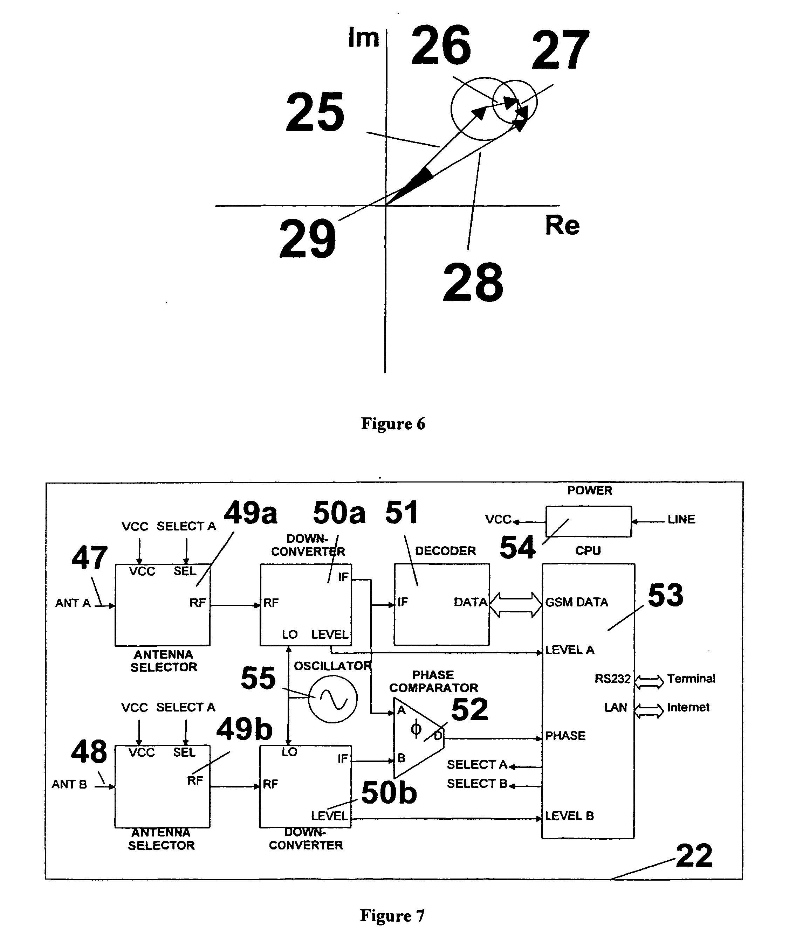

Figure 6 is a complex vector diagram showing the relation between the signal, interference and noise and the effect on the phase measurement accuracy for a received signal in a sensor unit. In figure 6, the angle error in the position indication is pointed out by vector analysis. The received signal is indicated by 28, and is composed by the signal component 41 that should ideally be received, a signal component 26 of noise added in the receiver, a component 27 caused by interference, originating from signals transmitted by other transmitters or by undesirable effects like reflections from walls and various objects located between the mobile transmitter and the sensor receiver. The influence by noise and interference leads to a phase error indicated by the angle 29.

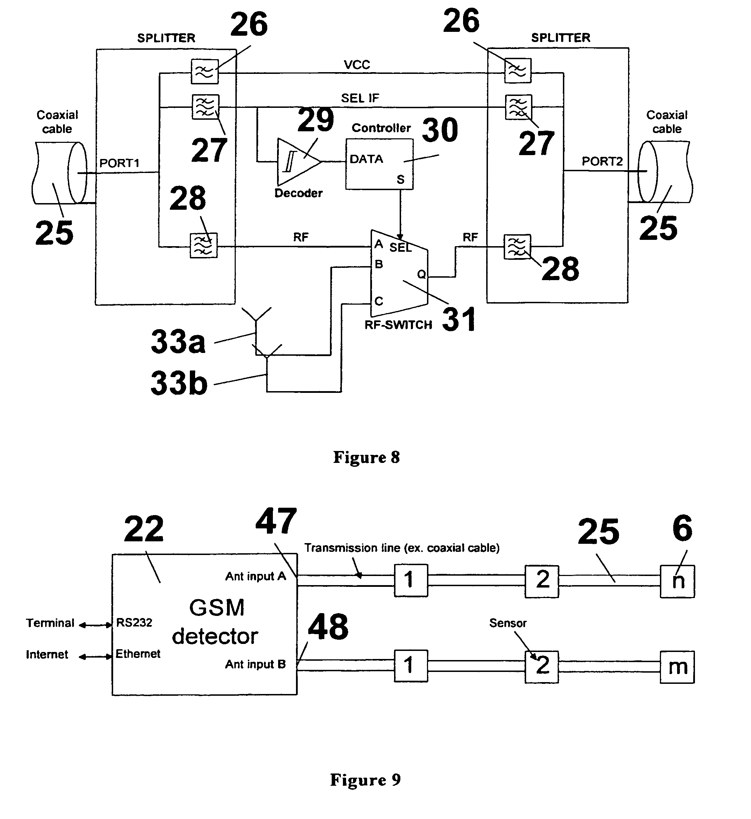

A block diagram of an example of a realization of a detector unit is shown in figure 7. Two chains of sensor units 6 of the type as shown in figure 8 and described below, each containing at least one sensor 6, are intended to be attached to the antenna input modules 49a and 49b respectively, at the first 47 and second 48 antenna input terminals respectively. The antenna input module can be realized very simple by attaching a RFC (Radio frequency choke inductor) to provide the supply voltage on the transmission line and line driver buffer together with a simple band-pass filter formed by a couple of inductors and capacitors, to transmit the antenna select messages on the transmission line. Each of the antenna input modules 49a, 49b is adapted to send a multiplex signal on a single transmission line such as a coaxial cable 25 out to the respective sensor units 6, as well as providing supply voltage to the sensor units 6. The SEL input of each antenna input module is controlled by a CPU 53 by connections not shown. The CPU is thus arranged to select one sensor unit on each of the networks 47 and 48.

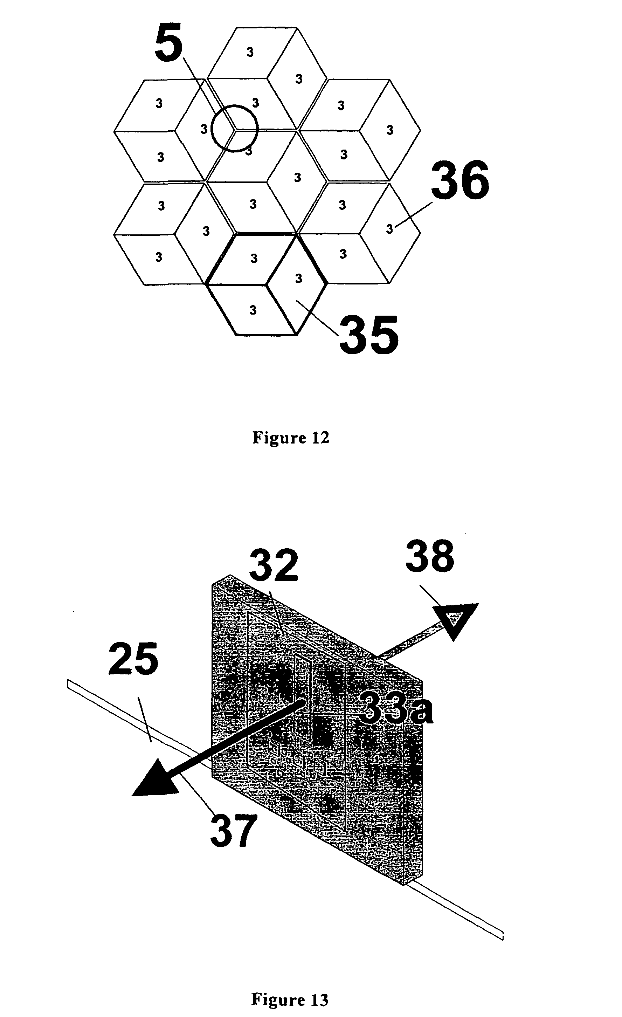

The RF signal from the selected sensor input to the first input point 47 is fed to the down-converters 50a and 50b respectively, which convert the signal frequency down to a suitable IF frequency, such as 10.7 MHz, with the required channel filtering to select one of the 200 kHz wide RF channels. The local oscillator input signal required to select the desired RF-channel is provided by a synthesized oscillator 55 which is arranged to be controlled by the CPU 53, by connections not shown. The CPU is arranged to perform a scan between the different uplink frequencies that is relevant for the local area. Refer to figure 12 and description for details. The IF-signal is then inserted to a decoder 51, which is arranged to decode the digital message information in the data stream. The decoder 51 includes a simple receiver circuit comprising a quantizer, a symbol decoder, a de-interleaver, a frame decoder, a block decoder and layer 3-message decoder. The quantizer contains circuits to demodulate the symbols in the data stream. The de-interleaver shuffles the bits according to a special pattern. The frame decoder perform error correction, and the block decoder performs de-fragmentation which mean that the complete data frames are put together for decoding of the complete messages in the layer 3 message decoder. Since the distance from the mobile station 3 and the receiver is relatively short (less than 100 meters, and typically less than 40 meters), the realization of the receiver becomes simple and cost effective. There is less need for sophisticated signal processing. Instead a very simple phase locked loop will yield the required performance. When utilizing a technique by scanning the uplink, it is not strictly required to implement base station receiver circuits and monitor the data from the nearby base stations 1.

The range of the equipment is limited by the fact that the system is not related to the cellular communication structure. This means that a situation where the mobile station transmits the lowest power level in, say, the DCS 1800 band for a GSM communication system, may be regarded as a worst case situation which forms the practical limit for the range of the system. Furthermore, an essential purpose of the invention is to make a very cost efficient solution, leading to simple demodulator circuits which makes the practical sensitivity low, compared to an optimum signal processing and Viterbi decoding base station system. For a worst case assumption, a mobile station can, according to ETS 300 577, transmit a minimum nominal power of 0 dBm with a tolerance of +/- 6 dB. A worst case transmission budget for GSM DCS 1800 may look like this:

| | | |
|---|---|---|
| Minimum emitted power, mobile station | -6 | dBm EIRP |
| Path loss, 100 m | 78 | dB |
| Receiver antenna gain | 0 | dB |
| **Receiver power** | **-84** | **dBm** |
| | | |
| Thermal noise floor | -174 | dBm/Hz |
| Receiver bandwidth, 200 kHz | +53 | dB |
| Noise figure, receiver | 10 | dB |
| **Receiver noise power** | **-111** | **dBm** |
| | | |
| Receiver S/N | 27 | dB |
| Required S/N for BER < $10^{-6}$ | 15 | dB |
| **System link margin** | **12** | **dB** |

The transmission budget indicates that a very simple receiver solution is able to operate with a sufficient link margin within a 100 m distance. At the near microwave frequency range for DCS the range will in practice be limited to below 100 m because of obstacles between the mobile station and the receiver. Because the system is a passive receiver system, any bit-errors occurring will not be compensated by re-transmission, and hence, the ability to switch between different receiver antenna is necessary if a high degree of availability for the system is required. The received messages are fed to the CPU (Central Processor unit) 53 by a bus interface. The IF signal originating from the sensor network connected to the input 47 and the sensor network connected to the input 48 are also fed to input terminals A and B respectively, of a phase comparator 52. The phase comparator produces an output voltage D that is essentially proportional to the phase difference between the two IF signals, and hence to the RF signals. The phase difference output is fed to an input PHASE of the CPU 53. Likewise, the signal level output from the down converters 50, indicating the levels of the two IF signals, are fed to inputs LEVEL A and LEVEL B inputs respectively, of the CPU 53. The CPU 53 comprises stored program instructions implemented to solve the matrix equation of measured data, stored data representing the known geometrical configuration of the sensor network, and program instructions implemented to determine whether the mobile station 3 is inside or outside a defined room volume. The communication to external equipment and system is done on a simple serial interface such as RS232 or on LAN interface with TCP/IP protocol for connection through the Internet.

In the detector unit 22 in figure 7, the measuring unit 19 essentially corresponds to the combination of the antenna input modules 49a, 49b, the down-converters 50a, 50b including the oscillator 55, and the phase comparator 52. The characteristics of the received carrier wave, provided by the measuring unit, comprises a combination of phase information and amplitude modulation. The control device (21, 23) essentially corresponds to functions performed by the CPU 53. The ID controller 20 essentially correspond to the decoder 51, as well as functions performed by the CPU 53.

A block diagram of an example of a realization of a sensor unit is shown in figure 8. Several sensor units are to be connected in a chain, where each sensor unit can be individually, remotely selected. The chain is interconnected with a single coax cable 25 between the sensor units. The transmission line carries concurrently DC supply voltage and data messages of which sensor to select, as well as a RF signal.

The sensor unit is based on a RF switch 31 for selecting one of two antenna elements 33a, 33b. The use of a RF switch has the advantages of making the sensor units very cost effective. Avoiding local oscillators in the sensor units eliminate the problem of unwanted spurious radiation, and hence ease type approval and lower production cost with no RF generating parts inside.

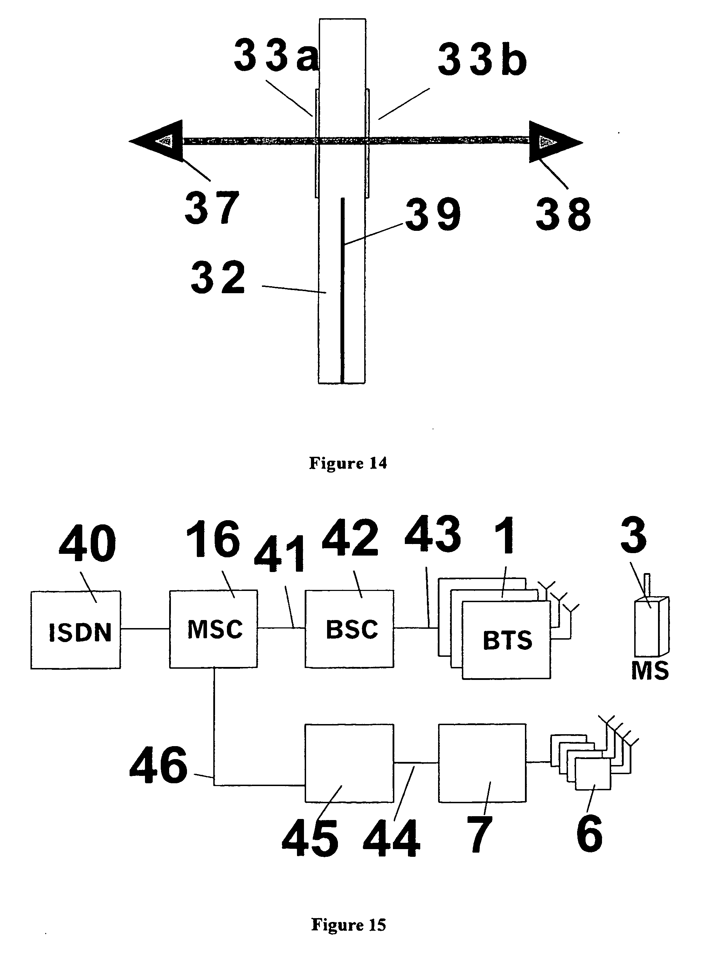

The signal from the transmission line is fed to the inputs of three different filters: A high pass filter 28 provides a RF signal fed to an input A of the RF switch 31. The high pass filter have typically a lower frequency cut-off at 800 MHz. The high-pass filter 28 can also be implemented as two band-pass-filters with pass-band in the respective bands 880-915 MHz and 1710-1785 MHz for a dual band GSM solution. There are suitable SAW (Surface Acoustic Wave) filters available for this purpose. These filters have some insertion loss so in this implementation a gain block should be inserted to compensate for the insertion loss. A low-pass filter 26 provides DC supply current to the internal circuitry in the sensor unit, and the DC-supply current is bypassed between the transmission lines. A band-pass filter 27 extracts a frequency band where control signals from the control unit antenna selector 49 is transmitted. This signal is bypassed between the transmission lines and is also fed to the input of a quantizer 29 which generate a digital signal that is to be decoded by the controller 30. Based on the received message the controller 30 determines if this actual sensor unit is activated or not. If the sensor unit is not activated, the RF-switch 31 is set in A-Q mode where the RF signal is bypassed between the transmission lines. On the other hand, if the sensor unit is activated, the RF-switch can be set in position B-Q if the sensor contains one integrated antenna element or in position C-Q if the sensor unit contains two integrated antenna elements. There are a variety of RF switches available on the marked today. One example is the GSWA-4 from Mini Circuits which is a solid state RF switch from DC to 3 GHz. Refer to figure 13 and figure 14 for detailed description of antenna configuration and physical outline for the sensor unit.

A block diagram of the sensor units and control unit connected together is shown in figure 9. A first sensor unit chain, connected to the input 47, comprises n sensor units 6 along a transmission line such as a coaxial cable 25, and sensor chain B consists of m sensors along another transmission line such as a coaxial cable 25. The complete system is interfaced to the external world through a simple RS232 terminal interface or through a local network (LAN) to the Internet.

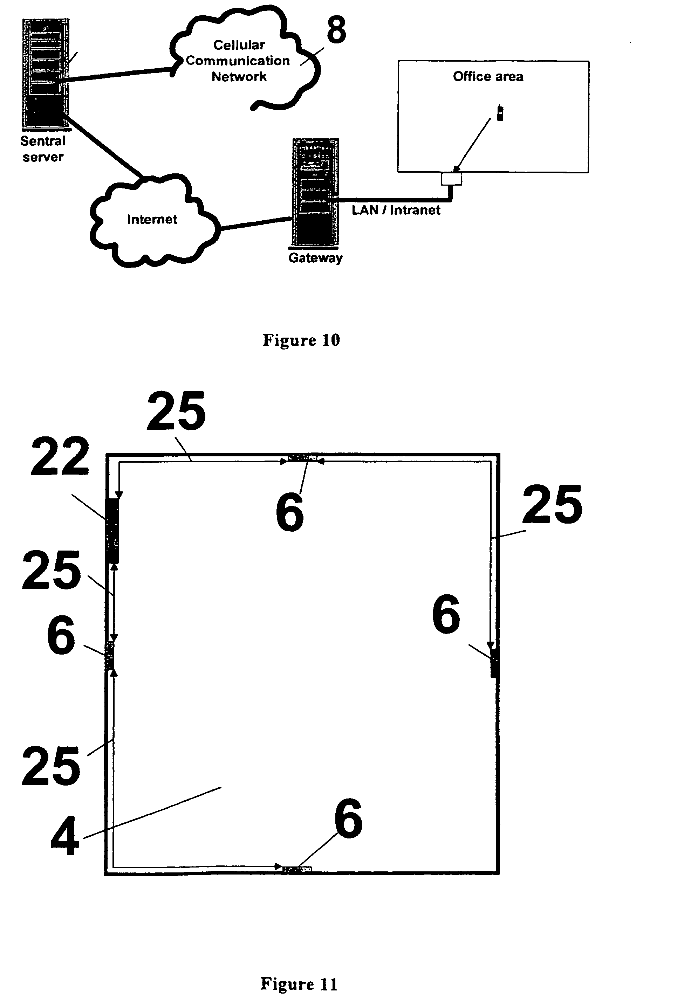

A block diagram of a total system for the implementation of reduced local mobile rates for office solutions is shown in figure 10. A central server 56 is connected to the cellular communication system network 8. The central server 56 contains the subscriber information such as IMSI information for the GSM, and the central server is also updated with mapping of subscriber information and temporary identifiers such as TMSI for the GSM system. When a call is set up in the office area, the detection unit 22 detects the mobile station 3 such as described in the examples shown in figure 7, 8 and 9, where the office area corresponds to both the spatial volume 5 and to the spatial portion 4. If the mobile station 3 is determined to be within the office area, i.e., within the spatial portion 5, a message is sent through a office gateway 34 through the Internet 35 to the central server 56. For an application for providing reduced rates, the time delay in the system is not critical, and the TMSI / IMSI mapping can be made in the central server 56 to identify the subscriber and the call. The billing to the subscriber is then corrected to the appropriate rate periodically. If the application shall provide higher rates, the need for a voice mail warning and time response become critical. In the case of enhancing time response, the central server 56 sends mapping information to the local decoders so the mapping to the subscriber can be made instantly at the local area. The command to put on voice mail is then sent directly to the cellular communication network as an SS7 message. The suitable network may need to be ISDN or fixed lines to achieve the required response time.

Figure 11 is a top view of a room provided with an embodiment of a system according to the invention. Figure 11 illustrates geometrically a possible physical configuration of the sensors 6 and detection unit 22 for a room in a building.

The room in this example is a meeting room and the service shall apply for the defined spatial portion 4, which simply is constituted by the room. The sensors 6 are placed on the side walls having a bi-directional antenna configuration as illustrated in figure 13. In this application example the room is in a one-floor building, and hence, the vertical precision is not critical. The room volume is in effect defined by the side walls. If a precise vertical accuracy was desired in a tall building, a set of sensors 6 would have been placed in the ceiling or in the floor/along the floor as well. The sensors are fed through a transmission line such as a coaxial cable 25 to the control unit 22.

Figure 12 illustrates a frequency plan and the utilization of frequencies in a cell based communication system. The illustration is used as an illustration for example on a low cost realization of the sensor and detector system.

A frequency planning scheme for a cell based communications network is illustrated in figure 12. Each cell 35 utilize 9 RF frequencies with 3 frequencies in each sector 36. The sensor and control unit is placed in an area 5 which are covered by 9 possible RF-frequencies. In order to make a cost effective solution it's not needed for the control unit to scan the information from the base stations 1 to know what possible uplink frequencies that are utilized in the area. A list of the possible frequencies or a slow speed scan can produce a scanning list of the possible frequencies.

Figure 13 is a perspective outline of a a sensor unit, showing a physical outline of an implementation of the sensor 6. The transmission line 25 is connected to a printed circuit board 32 with the antenna element 33a as a printed circuit track on the board. The printed circuit board contains two integrated antennas, 33a and 33b respectively, on each side of the board, to be able to measure relative phase difference between the two antenna elements, and hence, be able to determine whether the signal is traveling in the first direction 37 or in the second direction 38 through the printed circuit board.

Figure 14 is a sectional view of a sensor unit, showing a physical outline of an implementation of the sensor 6. The printed circuit board comprises three conductive layers, including a ground plane 39 in the middle plane of the circuit board. Two integrated antenna elements 33a, 33b are implemented, one on each side of the board. Each antenna element are realized as an area of conductive material on the printed circuit board. As explained above, the phase difference is used to determine the direction the wave travels through the board 32.

A simplified total system block diagram for implementation of a the positioning system with an extremely fast response with a GSM phase 2+ system is shown in figure 15. The ISDN network 40 is connected to a mobile switching center 16. The mobile switching center is attached to a base station system consisting of a base station controller 42 and a set of base station transceivers 1. The connection between the mobile switching center and the base station controller is an a-interface. If packet switching interface is used, the connection is called a Gb connection. The connection between the base station controller and the base station transceiver is call a A-bis connection 43. When a call is in progress from a fixed subscriber to a mobile subscriber, the call request is presented from the ISDN network 40 to the mobile switching center 16. Based on the contents of the Home Location Register and the Visitor Location Register a paging request for the subscriber is sent to the base station transceivers in the area where the subscriber is located. A paging request containing the IMSI (International Mobile Subscriber Identity) and/or TMSI (Temporary Mobile Subscriber Identity) is sent by the a-interface 41 to the base station controller 42 which starts paging the subscriber on the base station transceivers 1. A central server for the implementation of the positioning in this invention 45 is also connected to the mobile switching center is also connected to the mobile switching center 16 and the central server gets a copy of the paging request going to the base station controller 42 over another a-interface 46. The IMSI/TMSI information is processed and the mapping information is distributed to the controller units 7 placed locally by an interface 44 such as LAN, IDSN, Internet with the appropriate time response. When the mobile station 3 identifies itself, the mapping to find the subscriber can be done locally in the control unit, and hence, the time response becomes immediate. Another advantage that favors the configuration and interface as shown in figure 15 is that the interface to the mobile switching center is standard and no modification of the mobile switching center system is required to do the interfacing and connection.

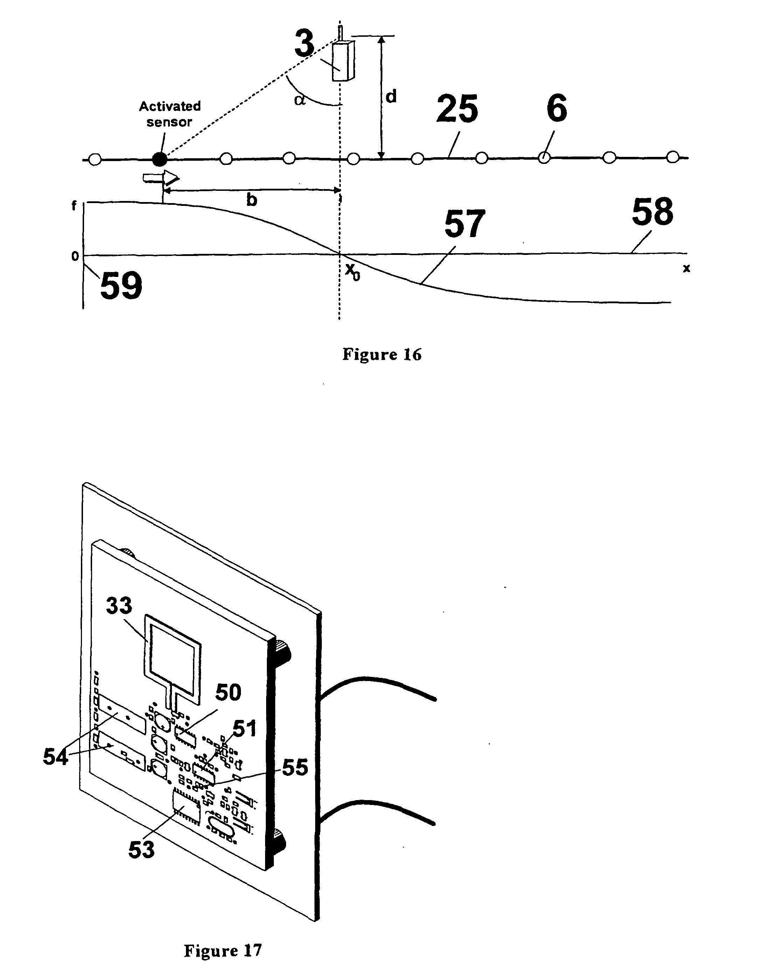

Figure 16 is a combined physical perspective and graph illustration of an example of position finding based on Doppler shift.

An example of a realization where the phase information from the sensors are used to determine the position is shown in figure 16. The sensors 6 are distributed along a line of transmission line 25. Each sensor is switched in as an activated sensor and by a series of switching a virtual movement is produced as indicated by the direction arrow. When moving towards the mobile station 3, a positive Doppler shift will result in a receiver carrier with higher frequency and moving away from the mobile station 3 a carrier with lower frequency will be received. The delta frequency 57 is indicated on the graph where the delta frequency 59 and the position 58 is indicated. Since a sweep is performed the position 58 is a function of time. If the receiver demodulated is realized by a phase locked loop where the frequency is controlled by a voltage controlled oscillator, the voltage will have the same transition as indicated in the graph 57. The Doppler shift is given by

$$\Delta f = \frac{dx}{dt} \cdot \frac{f}{c} \cdot \cos\alpha$$

The point where $\Delta f$ is zero, determines the x position and by measuring the magnitude of the Doppler shift during the sweep, the angle a can be determined, and hence, the distance, d, to the transmitting mobile station is calculated by

$$d = \frac{b}{\tan\alpha}$$

Figure 17 is a perspective outline of a device that constitutes a system according to the invention in its simplest form. The device includes a single sensor unit, comprising only one antenna element (33), and a detector unit integrated in the device.

The device is to be located at a position within or close to said spatial portion 4. The detector unit includes a measuring device (19) for providing measurements of characteristics of the carrier wave of at least one signal received by the antenna element 33. In this particular embodiment, said characteristics preferably constitute the amplitude of the received signal. Thus, the measuring device 19 may simply be a amplitude detector with an amplitude threshold decision and a control device 21, 23 for determining whether the position of the mobile communication unit 3 is within the limited spatial portion 4, based on said measurements. The precision may be enhanced by decoding data from the base station 1. By decoding of the signalling channel, it's possible to determine the power level that the transmitter in the mobile station 3 is set to. To be able to monitor the signalling channel from the base station 1 and/or the mobile station 3 the control device must have the appropriate decryption modules to decrypt the signal channel transfer. Another realisation could be to send encrypted data frames to a central server which perform the decryption and power level decision. Connection of a central server to the BSC (Base station controller) through the A-bis interface is yet another method to extract the current power level that the mobile station 3 utilise by monitoring signalling messages from the BSC to the BTS (Base station transceiver).

The system according to the invention is primarily intended for use with cellular communication systems such as GSM, but embodiments of the system also applies for other communication systems where one wish to define a special service within the coverage range of the communication system. An example of another communication system is a system in conformity with the Bluetooth specification, with a very short range of 10-40 m that defines a local communication system between a mobile unit 3 and a Bluetooth node 1. By inserting sensors inside the coverage area, a small spatial volume portion can be sharply defined by using the principles as described by the invention.

**Claims**

1. System for determining whether the position of a mobile communication unit (3), operating in a mobile communication system such as a cell based communication system, is within a limited spatial portion (4),
   **characterized in that** it comprises

   - a number of sensor units (6), each located at a position within or close to said spatial portion (4), and each comprising at least one antenna element (33a, 33b), each arranged to receive a signal transmitted from the mobile communication unit (3),
   - a detector unit (22), comprising

   a measuring device (19) for providing measurements of characteristics of the carrier wave of at least one signal received by the antenna elements (33a, 33b), and a control device (21, 23) for determining whether the position of the mobile communication unit (3) is within the limited spatial portion (4), based on said measurements.

2. System according to claim 1,
   **characterized in that** said characteristics of the carrier wave comprise the phase, the amplitude or the frequency of the carrier wave, or any combination thereof.

**3.** System according to claim 1-2,
**characterized in that** the sensor units (6) comprise means for selectively connecting the antenna elements to an input of the detector unit (22).

**4.** System according to claims 1-3,
**characterized in that** it further comprises a decoding device (20), arranged to provide identity data associated with the mobile communication unit by processing a received signal, transmitted from the mobile communication unit (3).

**5.** System according to claims 1-4,
**characterized in that** an output of the detector unit (22) is further connected to the cell based communication system through a communication network (8).

**6.** System according to claims 1-5,
**characterized in**

- **that** the detector unit (22) comprises a first (47) and a second (48) antenna input,
- **that** the measuring device comprises a first (49a) and a second (49b) antenna input devices, whose outputs are connected to a phase detecting device (50a, 50b, 52), providing a phase difference signal indicating the phase difference between the signals applied to the first (47) and second (48) antenna inputs.

**7.** System according to claim 6,
**characterized in that** the phase detecting device (50a, 50b, 52) comprise a first (50a) and a second (50b) frequency down-converter, whose outputs are connected to a phase comparator (52), providing said phase difference signal.

**8.** System according to claim 7,
**characterized in that** it further comprises a decoding device (20), arranged to provide identity data associated with the mobile communication unit by processing a received signal, transmitted from the mobile communication unit (3),
said decoding device comprising a decoder (51) connected to the output of the first (50a) or the second (50b) frequency down-converter.

**9.** System according to claims 1-8,
**characterized in that** each sensor unit (6) comprises two antenna elements (33a, 33b).

**10.** System according to claims 1-9,
**characterized in that** each sensor unit (6) comprises circuits arranged to derive

- a supply voltage,
- a selector signal associated with the selection of the sensor unit and with the selection of a particular antenna within the sensor unit (6), and
- a RF signal,
  from a signal applied to the sensor unit (6).

**11.** System according to claim 10,
**characterized in that** each sensor unit (6) comprises

- an input terminal, connected to a low pass filter (26) for deriving DC supply voltage for supplying power to the sensor unit, and
- a ground terminal.

**12.** System according to claims 10-11,
**characterized in that** each sensor unit (6) comprises an input terminal, connected to a band-pass filter (27), in turn connected to a quantizer/controller (29, 30), for deriving a selector signal, said selector signal

- indicating whether said sensor unit (6) is a selected sensor unit, and, in the case that the sensor unit comprises two or more antennas (33a, 33b),

- indicating which of the antennas that should be a selected antenna within the sensor unit.

**13.** System according to claims 10-12,
**characterized in that** each sensor unit (6) comprises an input terminal, connected to a high-pass filter (28) for deriving an input RF signal, said input RF signal being connected to an electronic switch, arranged for selecting either said RF signal or an antenna signal as a forward RF signal.

**14.** System according to claim 13,
**characterized in that** said electronic switch comprises a select input, connected to a selector signal derived from the output of a quantizer/controller (29, 30) fed by the output of a band-pass filter whose input is connected to said input terminal of the sensor unit (6).

**15.** System according to claim 1-5,
**characterized in that** the detector unit (22) is

- arranged to calculate the position of the mobile communication unit (3), based on said measurements, and
- arranged to determine whether the position of the mobile communication unit (3) is within said limited space portion (4), based on said position and stored data defining said space portion.

**16.** System according to claim 1-15,
**characterized in that** each sensor unit comprises two antenna elements, and that the sensor unit (6) is arranged to detect the essential direction of a RF signal intersecting the antenna elements (6).

**17.** System according to claim 16,
**characterized in**
**that** the sensor unit (6) comprises two planar antenna elements (33a, 33b), arranged parallel to a detector plane 38 and on opposite sides of said detector plane 38.

**18.** System according to claim 17,
**characterized in**
**that** the measuring device (19) is arranged

- to provide a phase difference signal indicating the phase difference between the signals received by the two antenna elements (33a, 33b) and
- to provide a wave direction signal, indicating the essential direction of a RF signal intersecting the detector plane, based on said phase difference signal.

**19.** System according to claim 18, wherein the boundaries of the limited space portion (4) is defined by the location of a number of sensor units (6),
**characterized in**
**that** the control device (21, 23) is arranged to determine whether the position of the mobile communication unit (3) is within the limited spatial portion (4), based on said wave direction signals.

**20.** System according to claim 19,
**characterized in that** the control device (21, 23) is arranged to determine that the mobile communication unit (3) is within the limited spatial portion (4) when essentially all said wave direction signals indicate that the directions of the RF signals are directed outwards from the spatial portion.

**21.** System according to claims 1-20,
**characterized in that** the sensor units (6) are located at a distance less than 100 meters from any point in the spatial portion (4).

**22.** System according to claims 1-21,
**characterized in that** the spatial portion and the system are stationary.

**23.** System according to claims 1-21,
**characterized in that** the spatial portion and at least the sensor units are moveable.

24. Use of a system according to claim 1-23, for controlling characteristics of communication services available to the mobile communication unit in the cell-based communication system.

25. Use of a system according to claim 1-23, for controlling characteristics of call rates associated with the use of the mobile communication unit in the cell-based communication system.

26. Use of a system according to claims 1-23, for determining whether the position of a mobile communication unit (3) is within a room in a building.

27. Use of a system according to claim 23, for determining whether the position of a mobile communication unit (3) is within a moving vehicle or vessel.


**Patentansprüche**

1. System zum Bestimmen, ob die Position einer mobilen Kommunikationseinheit (3), die in einem mobilen Kommunikationssystem wie z.B. einem (funk)zellenbasierten Kommunikationssystem arbeitet, in einem begrenzten räumlichen Abschnitt (4) liegt,
   **dadurch gekennzeichnet, dass** es umfasst

   - eine Anzahl Sensoreinheiten (6), die sich jeweils an einer Position in oder nahe dem räumlichen Abschnitt (4) befinden und jeweils mindestens ein Antennenelement (33a, 33b) aufweisen, von denen jedes angeordnet ist, um ein von der mobilen Kommunikationseinheit (3) gesendetes Signal zu empfangen,
   - eine Detektoreinheit (22), umfassend

   eine Messeinrichtung (19) zum Bereitstellen von Messungen der Merkmale der Trägerwelle von mindestens einem von den Antennenelementen (33a, 33b) empfangenen Signal und
   eine Steuereinrichtung (21, 23), um basierend auf den Messungen zu bestimmen, ob die Position der mobilen Kommunikationseinheit (3) in dem begrenzten räumlichen Abschnitt (4) liegt,.

2. System nach Anspruch 1,
   **dadurch gekennzeichnet, dass** die Merkmale der Trägerwelle die Phase, die Amplitude oder die Frequenz der Trägerwelle oder eine beliebige Kombination daraus umfassen.

3. System nach Ansprüchen 1-2,
   **dadurch gekennzeichnet, dass** die Sensoreinheiten (6) Mittel zum selektiven Verbinden der Antennenelemente mit einem Eingang der Detektoreinheit (22) umfassen.

4. System nach Ansprüchen 1-3,
   **dadurch gekennzeichnet, dass** es weiterhin eine Dekodiereinrichtung (20) umfasst, die angeordnet ist, um durch Verarbeiten eines empfangenen Signals, das von der mobilen Kommunikationseinheit (3) gesendet wird, Identitätsdaten bereitzustellen, die mit der mobilen Kommunikationseinheit verknüpft sind.

5. System nach Ansprüchen 1-4,
   **dadurch gekennzeichnet, dass** ein Ausgang der Detektoreinheit weiterhin durch ein Kommunikationsnetzwerk (8) mit dem (funk)zellenbasierten Kommunikationssystem verbunden ist.

6. System nach Ansprüchen 1-5,
   **dadurch gekennzeichnet,**

   - **dass** die Detektoreinheit (22) einen ersten (47) und einen zweiten (48) Antenneneingang umfasst,
   - **dass** die Messeinrichtung eine erste (49a) und eine zweite (49b) Antenneneingangseinrichtung umfasst, deren Ausgänge mit einer Phasenerkennungseinrichtung (50a, 50b, 52) verbunden sind, wodurch ein Phasendifferenzsignal bereitgestellt wird, das die Phasendifferenz zwischen den an die ersten (47) und zweiten (48) Antenneneingänge angelegten Signalen angibt.

7. System nach Anspruch 6,
   **dadurch gekennzeichnet, dass** die Phasenerkennungseinrichtung (50a, 50b, 52) einen ersten (50a) und einen zweiten (50b) Frequenzabwärtswandler umfasst, deren Ausgänge mit einem Phasenkomparator (52) verbunden sind, wodurch das Phasendifferenzsignal bereitgestellt wird.

8. System nach Anspruch 7,
**dadurch gekennzeichnet, dass** es weiterhin eine Dekodiereinrichtung (20) umfasst, die angeordnet ist, um durch Verarbeiten eines empfangenen Signals, das von der mobilen Kommunikationseinheit (3) gesendet wird, Identitätsdaten bereitzustellen, die mit der mobilen Kommunikationseinheit verknüpft sind,
wobei die Dekodiereinrichtung einen Dekoder (51) umfasst, der mit dem Ausgang des ersten (50a) oder des zweiten (50b) Frequenzabwärtswandler verbunden ist.

9. System nach Ansprüchen 1-8,
**dadurch gekennzeichnet, dass** jede Sensoreinheit (6) zwei Antennenelemente (33a, 33b) umfasst.

10. System nach Ansprüchen 1-9,
**dadurch gekennzeichnet, dass** jede Sensoreinheit (6) Schaltungen umfasst, die angeordnet sind, um von einem an die Sensoreinheit (6) angelegten Signal

- eine Versorgungsspannung,
- ein Auswahlsignal, das mit der Auswahl der Sensoreinheit und mit der Auswahl einer bestimmten Antenne in der Sensoreinheit (6) verknüpft ist, und
- ein HF-Signal

abzuleiten.

11. System nach Anspruch 10,
**dadurch gekennzeichnet, dass** jede Sensoreinheit (6)

- einen Eingangsanschluss, der zum Ableiten einer Versorgungsgleichspannung zum Versorgen der Sensoreinheit mit Strom mit einem Tiefpassfilter (26) verbunden ist, und
- einen Erdungskontakt

umfasst.

12. System nach Ansprüchen 10-11,
**dadurch gekennzeichnet, dass** jede Sensoreinheit (6) einen Eingangsanschluss umfasst, der mit einem Bandpassfilter (27) verbunden ist, der wiederum mit einem A/D-Wandler/Steuergerät (29, 30) verbunden ist, um ein Auswahlsignal abzuleiten, wobei das Auswahlsignal

- angibt, ob die Sensoreinheit (6) eine ausgewählte Sensoreinheit ist, und, für den Fall, dass die Sensoreinheit zwei oder mehrere Antennen (33a, 33b) umfasst,
- angibt, welche der Antennen in der Sensoreinheit eine ausgewählte Antenne sein soll.

13. System nach Ansprüchen 10-12,
**dadurch gekennzeichnet, dass** jede Sensoreinheit (6) einen Eingangsanschluss umfasst, der mit einem Hochpassfilter (28) zum Ableiten eines Eingangs-HF-Signals verbunden ist, wobei das Eingangs-HF-Signal mit einem elektronischen Schalter verbunden ist, der angeordnet ist, um entweder das HF-Signal oder ein Antennensignal als Vorwärts-HF-Signal auszuwählen.

14. System nach Anspruch 13,
**dadurch gekennzeichnet, dass** der elektronische Schalter einen Auswahleingang umfasst, der mit einem Auswahlsignal verbunden ist, das vom Ausgang eines A/D-Wandlers/Steuergeräts (29, 30) abgeleitet wird, der durch den Ausgang eines Bandpassfilters gespeist wird, dessen Eingang mit dem Eingangsanschluss der Sensoreinheit (6) verbunden ist.

15. System nach Ansprüchen 1-5,
**dadurch gekennzeichnet, dass** die Detektoreinheit (22)

- angeordnet ist, um die Position der mobilen Kommunikationseinheit (3) basierend auf den Messungen zu berechnen, und

- angeordnet ist, um zu bestimmen, ob die Position der mobilen Kommunikationseinheit (3) in dem begrenzten räumlichen Abschnitt (4) liegt, basierend auf der Position und gespeicherten Daten, die den räumlichen Abschnitt definieren.

16. System nach Ansprüchen 1-15,
**dadurch gekennzeichnet, dass** jede Sensoreinheit zwei Antennenelemente umfasst und dass die Sensoreinheit (6) angeordnet ist, um die wesentliche Richtung eines HF-Signals zu erkennen, das die Antennenelemente (6) schneidet.

17. System nach Anspruch 16,
**dadurch gekennzeichnet,**
**dass** die Sensoreinheit (6) zwei ebene Antennenelemente (33a, 33b) umfasst, die parallel zu einer Detektorebene 38 und auf entgegengesetzten Seiten der Detektorebene 38 angeordnet sind.

18. System nach Anspruch 17,
**dadurch gekennzeichnet,**
**dass** die Messeinrichtung (19) angeordnet ist,

- um ein Phasendifferenzsignal bereitzustellen, das die Phasendifferenz zwischen den von den beiden Antennenelementen (33a, 33b) empfangenen Signalen angibt, und
- um ein Wellenrichtungssignal bereitzustellen, das die wesentliche Richtung eines HF-Signals angibt, das die Detektorebene schneidet, basierend auf dem Phasendifferenzsignal.

19. System nach Anspruch 18, wobei die Grenzen des begrenzten Raumabschnitts (4) durch die Lage einer Anzahl von Sensoreinheiten (6) definiert sind,
**dadurch gekennzeichnet,**
**dass** die Steuereinrichtung (21, 23) angeordnet ist, um basierend auf den Wellenrichtungssignalen zu bestimmen, ob die Position der mobilen Kommunikationseinheit (3) in dem begrenzten räumlichen Abschnitt (4) liegt.

20. System nach Anspruch 19,
**dadurch gekennzeichnet, dass** die Steuereinrichtung (21, 23) angeordnet ist, um zu bestimmen, dass die mobile Kommunikationseinheit (3) in dem begrenzten räumlichen Abschnitt (4) liegt, wenn im wesentlichen alle Wellenrichtungssignale angeben, dass die Richtungen der HF-Signale vom räumlichen Abschnitt nach außen gerichtet sind.

21. System nach Ansprüchen 1-20,
**dadurch gekennzeichnet, dass** sich die Sensoreinheiten (6) in einem Abstand von weniger als 100 Meter von jeglichem Punkt im räumlichen Abschnitt (4) befinden.

22. System nach Ansprüchen 1-21,
**dadurch gekennzeichnet, dass** der räumliche Abschnitt und das System stationär sind.

23. System nach Ansprüchen 1-21,
**dadurch gekennzeichnet, dass** der räumliche Abschnitt und mindestens die Sensoreinheiten beweglich sind.

24. Verwendung eines Systems nach Ansprüchen 1-23 zum Steuern der Merkmale der Kommunikationsdienstleistungen, die für die mobile Kommunikationseinheit im (funk)zellenbasierten Kommunikationssystem verfügbar sind.

25. Verwendung eines Systems nach Ansprüchen 1-23 zum Steuern der Merkmale der Rufraten, die mit der Verwendung der mobilen Kommunikationseinheit im zellenbasierten Kommunikationssystem verknüpft sind.

26. Verwendung eines Systems nach Ansprüchen 1-23 zum Bestimmen, ob die Position einer mobilen Kommunikationseinheit (3) in einem Zimmer in einem Gebäude liegt.

27. Verwendung eines Systems nach Anspruch 23 zum Bestimmen, ob die Position einer mobilen Kommunikationseinheit (3) in einem sich bewegenden Fahrzeug oder Schiff liegt.

**Revendications**

**1.** Système pour déterminer si la position d'une unité de communication mobile (3), fonctionnant dans un système de communication mobile tel qu'un système de communication à base de cellules, est à l'intérieur d'une portion spatiale limitée (4),
**caractérisé en ce qu'**il comprend

- un certain nombre d'unités de capteur (6), chacune située dans une position à l'intérieur ou près de ladite portion spatiale (4), et comprenant chacune au moins un élément d'antenne (33a, 33b), chacun agencé pour recevoir un signal émis à partir de l'unité de communication mobile (3),
- une unité de détecteur (22), comprenant

un dispositif de mesure (19) pour fournir des mesures de caractéristiques de l'onde porteuse d'au moins un signal reçu par les éléments d'antenne (33a, 33b), et un dispositif de commande (21, 23) pour déterminer si la position de l'unité de communication mobile (3) est à l'intérieur de la portion spatiale limitée (4), sur la base desdites mesures.

**2.** Système selon la revendication 1,
**caractérisé en ce que** lesdites caractéristiques de l'onde porteuse comprennent la phase, l'amplitude ou la fréquence de l'onde porteuse, ou une combinaison quelconque de celles-ci.

**3.** Système selon les revendications 1 à 2,
**caractérisé en ce que** les unités de capteur (6) comprennent des moyens pour connecter sélectivement les éléments d'antenne à une entrée de l'unité de détecteur (22).

**4.** Système selon les revendications 1 à 3,
**caractérisé en ce qu'**il comprend également un dispositif de décodage (20), agencé pour fournir des données d'identité associées à l'unité de communication mobile par traitement d'un signal reçu, émis à partir de l'unité de communication mobile (3).

**5.** Système selon les revendications 1 à 4,
**caractérisé en ce qu'**une sortie de l'unité de détecteur (22) est également connectée au système de communication à base de cellules via un réseau de communication (8).

**6.** Système selon les revendications 1 à 5,
**caractérisé en ce que**

- l'unité de détecteur (22) comprend une première (47) et une deuxième (48) entrées d'antenne,
- le dispositif de mesure comprend des premier (49a) et deuxième (49b) dispositifs d'entrée d'antenne, dont les sorties sont connectées à un dispositif de détection de phase (50a, 50b, 52), fournissant un signal de variation de phase indiquant la variation de phase entre les signaux appliqués aux première (47) et deuxième (48) entrées d'antenne.

**7.** Système selon la revendication 6,
**caractérisé en ce que** le dispositif de détection de phase (50a, 50b, 52) comprend un premier (50a) et un deuxième (50b) convertisseurs-abaisseurs de fréquence dont les sorties sont connectées à un comparateur de phase (52), fournissant le signal de variation de phase.

**8.** Système selon la revendication 7,
**caractérisé en ce qu'**il comprend également un dispositif de décodage (20), agencé pour fournir des données d'identité associées à l'unité de communication mobile par traitement d'un signal reçu, émis à partir de l'unité de communication mobile (3), ledit dispositif de décodage comprenant un décodeur (51) connecté à la sortie du premier (50a) ou du deuxième (50b) convertisseur-abaisseur de fréquence.

**9.** Système selon les revendications 1 à 8,
**caractérisé en ce que** chaque unité de capteur (6) comprend deux éléments d'antenne (33a, 33b).

**10.** Système selon les revendications 1 à 9,

**caractérisé en ce que** chaque unité de capteur (6) comprend des circuits agencés pour dériver

- une tension d'alimentation,
- un signal de sélecteur associé à la sélection de l'unité de capteur et à la sélection d'une antenne particulière à l'intérieur de l'unité de capteur (6), et
- un signal RF,

à partir d'un signal appliqué à l'unité de capteur (6).

**11.** Système selon la revendication 10,
**caractérisé en ce que** chaque unité de capteur (6) comprend

- une borne d'entrée, connectée à un filtre passe-bas (26) pour dériver une tension d'alimentation CC pour fournir du courant à l'unité de capteur, et
- une borne de terre.

**12.** Système selon les revendications 10 à 11,
**caractérisé en ce que** chaque unité de capteur (6) comprend une borne d'entrée, connectée à un filtre passe-bande (27), connecté à son tour à un quantificateur/contrôleur (29, 30), pour dériver un signal de sélecteur, ledit signal de sélecteur

- indiquant si ladite unité de capteur (6) est une unité de capteur sélectionnée, et, dans le cas où l'unité de capteur comprend deux antennes (33a, 33b) ou plus,
- indiquant laquelle des antennes doit être une antenne sélectionnée à l'intérieur de l'unité de capteur.

**13.** Système selon les revendications 10 à 12,
**caractérisé en ce que** chaque unité de capteur (6) comprend une borne d'entrée, connectée à un filtre passe-haut (28) pour dériver un signal RF d'entrée, ledit signal RF d'entrée étant connecté à un commutateur électronique, agencé pour sélectionner soit ledit signal RF soit un signal d'antenne en tant que signal RF vers l'avant.

**14.** Système selon la revendication 13,
**caractérisé en ce que** ledit commutateur électronique comprend une entrée de sélection, connectée à un signal de sélecteur dérivé de la sortie d'un quantificateur/contrôleur (29, 30) alimenté par la sortie d'un filtre passe-bande dont l'entrée est connectée à ladite borne d'entrée de l'unité de capteur (6).

**15.** Système selon les revendications 1 à 5,
**caractérisé en ce que** l'unité de détecteur (22) est

- agencée pour calculer la position de l'unité de communication mobile (3), sur la base desdites mesures, et
- est agencée pour déterminer si la position d'une unité de communication mobile (3) est à l'intérieur de ladite portion spatiale limitée (4), sur la base de ladite position et de données enregistrées définissant ladite portion d'espace.

**16.** Système selon les revendications 1 à 15,
**caractérisé en ce que** chaque unité de capteur comprend deux éléments d'antenne, et **en ce que** l'unité de capteur (6) est agencée pour détecter la direction essentielle d'un signal RF croisant les éléments d'antenne (6).

**17.** Système selon la revendication 16,
**caractérisé en ce que**
l'unité de capteur (6) comprend deux éléments d'antenne (33a, 33b) plans, agencés parallèlement à un plan de détecteur 38 et sur des côtés opposés dudit plan de détecteur 38.

**18.** Système selon la revendication 17,
**caractérisé en ce que**
le dispositif de mesure (19) est agencé

- pour fournir un signal de variation de phase indiquant la variation de phase entre les signaux reçus par les deux éléments d'antenne (33a, 33b) et

- pour fournir un signal de direction d'onde, indiquant la direction essentielle d'un signal RF croisant le plan de détecteur, sur la base dudit signal de variation de phase.

**19.** Système selon la revendication 18, dans lequel les limites de la portion spatiale limitée (4) sont définies par l'emplacement d'un certain nombre d'unités de capteur (6),
**caractérisé en ce que**
le dispositif de commande (21, 23) est agencé pour déterminer si la position de l'unité de communication mobile (3) est à l'intérieur de la portion spatiale limitée (4), sur la base desdits signaux de direction d'onde.

**20.** Système selon la revendication 19,
**caractérisé en ce que** le dispositif de commande (21, 23) est agencé pour déterminer que l'unité de communication mobile (3) est à l'intérieur de la portion spatiale limitée (4) quand essentiellement la totalité desdits signaux de direction d'onde indiquent que les directions des signaux RF sont dirigées vers l'extérieur à partir de la portion spatiale.

**21.** Système selon les revendications 1 à 20,
**caractérisé en ce que** les unités de capteur (6) sont situées à une distance inférieure à 100 mètres à partir de n'importe quel point dans la portion spatiale (4).

**22.** Système selon les revendications 1 à 21,
**caractérisé en ce que** la portion spatiale et le système sont stationnaires.

**23.** Système selon les revendications 1 à 21,
**caractérisé en ce que** la portion spatiale et au moins les unités de capteur sont mobiles.

**24.** Utilisation d'un système selon les revendications 1 à 23, pour commander des caractéristiques de services de communication disponibles pour l'unité de communication mobile dans le système de communication à base de cellules.

**25.** Utilisation d'un système selon les revendications 1 à 23, pour commander des caractéristiques de tarifs des communications associés à l'utilisation de l'unité de communication mobile dans le système de communication à base de cellules.

**26.** Utilisation d'un système selon les revendications 1 à 23, pour déterminer si la portion d'une unité de communication mobile (3) est à l'intérieur d'un local dans un bâtiment.

**27.** Utilisation d'un système selon la revendication 23, pour déterminer si la portion d'une unité de communication mobile (3) est à l'intérieur d'un véhicule ou vaisseau mobile.

Figure 1

Figure 2

**Figure 3**

**Figure 4**

Figure 5

Figure 6

Figure 7

Figure 8

Figure 9

**Figure 10**

**Figure 11**

**5**

**36**

**35**

Figure 12

**32**

**38**

**25**

**33a**

**37**

Figure 13

**Figure 14**

**Figure 15**

Figure 16

Figure 17